# FASCICULE DE BREVET EUROPEEN

(11) **EP 2 109 712 B1**
(45) Date de publication et mention de la délivrance du brevet: **03.11.2010**
(21) Numéro de dépôt: 08761969.8
(22) Date de dépôt: 23.01.2008
(51) Int. Cl.: F02K 1/72

(54) **NACELLE D'AERONEF INCORPORANT UN DISPOSITIF POUR INVERSER LA POUSSEE**
TRIEBWERKSGONDEL MIT SCHUBUMKEHRVORRICHTUNG
AIRCRAFT NACELLE INCORPORATING A THRUST-REVERSING DEVICE

(30) Priorité: 01.02.2007 FR 0753011
(43) Date de publication de la demande: 21.10.2009
(73) Titulaire: AIRBUS France, 31060 Toulouse (FR)
(72) Inventeur: BULIN, Guillaume, F-31700 Blagnac (FR); OBERLE, Patrick, F-82600 Verdun Sur Garonne (FR)
(74) Mandataire: Fantin, Laurent
(86) Numéro de dépôt international: PCT/FR2008/050102
(87) Numéro de publication internationale: WO 2008/107605

(56) Documents cités:
- EP-A1- 0 574 730
- WO-A-96/38661
- FR-A- 1 596 120
- GB-A- 808 608

## Description

La présente invention se rapporte à une nacelle d'aéronef et plus particulièrement à un dispositif prévu sur une nacelle d'aéronef pour diminuer, annuler ou inverser la poussée produite par un ensemble propulsif.

Un ensemble propulsif d'aéronef comprend un moteur avec d'une part une soufflante comportant un rotor muni de pales et un stator muni d'aubes, et d'autre part, un conduit primaire dans lequel sont disposés selon le sens d'écoulement de l'air, des étages de compresseurs, une chambre de combustion et des étages de turbines. Le moteur est disposé dans une nacelle qui comprend en amont de la soufflante une entrée d'air et en aval du stator de la soufflante un conduit secondaire.

De manière générale, la nacelle est constituée de deux bifurcations disposées dans le conduit secondaire et suivant des positions angulaires respectivement supérieure à 12h et inférieure à 6h. Ces deux bifurcations constituent des carénages aérodynamiques aux éléments de structure et aux systèmes de l'ensemble propulsif qui relient le conduit primaire au reste de la nacelle. Lorsque la motorisation est prévue sous la voilure, le mât fixant l'ensemble propulsif à la voilure est en partie disposé dans la bifurcation supérieure pour relier le conduit primaire au reste de l'ensemble propulsif.

Afin de réduire les nuisances sonores, certaines parties des surfaces du conduit secondaire comprennent des revêtements pour le traitement acoustique de surface.

Un ensemble propulsif comprend généralement un dispositif d'inversion de poussée permettant de dévier au moins une partie du flux afin de réduire, annuler ou inverser la poussée produite par ledit ensemble propulsif à l'aide d'un ou plusieurs obstacles physiques mobiles.

Selon un mode de réalisation décrit notamment dans le document EP-1515035, la nacelle comprend au moins une partie mobile susceptible de se translater vers l'arrière de la nacelle de manière à ménager entre les parties fixes et ladite au moins une partie mobile au moins une ouverture radiale vers laquelle peut être déviée au moins une partie du flux s'écoulant dans le conduit secondaire. Selon ce mode de réalisation, le conduit secondaire a des formes adaptées, notamment coudées afin que la partie mobile vienne en contact avec la paroi intérieure du conduit secondaire de manière à obturer ledit conduit lorsque la partie mobile est translatée vers l'arrière. Même si cette solution simplifie la conception du dispositif d'inversion de poussée, elle impose une contrainte supplémentaire au conduit secondaire, notamment une forme particulière qui tend à réduire les performances de l'ensemble propulsif.

Selon une autre variante dite à porte pivotante, la nacelle comprend une partie mobile appelée porte susceptible de pivoter par rapport à un axe de manière à générer une ouverture radiale après pivotement, ladite porte comprenant une partie venant en saillie dans le conduit secondaire de manière à former un obstacle susceptible de dévier au moins une partie du flux s'écoulant dans ledit conduit secondaire en direction de l'ouverture radiale.

Une autre variante est décrite dans le document FR 1596120.

Selon une autre variante dite à cascades, la nacelle comprend au moins une partie mobile susceptible de se translater vers l'arrière de la nacelle de manière à ménager entre les parties fixes et ladite au moins une partie mobile au moins une ouverture radiale ainsi que des volets prévus dans le conduit secondaire, articulés par rapport à la partie mobile, susceptibles d'occuper une première position déployée dans laquelle ils obturent au moins partiellement le conduit secondaire de manière à dévier le flux d'air en direction de l'ouverture radiale et une seconde position rabattue, plaquée contre la surface de la nacelle. Des bielles sont généralement prévues pour manoeuvrer les volets, l'une des extrémités des bielles étant reliée au volet, l'autre à la motorisation.

Les inverseurs de poussée de type à porte pivotante ou à cascades ne donnent pas satisfaction pour les raisons suivantes.

Ces configurations limitent la surface interne de la nacelle susceptible de comprendre un revêtement pour le traitement acoustique. En effet, les zones de raccordement entre les parties fixes et les parties mobiles, les zones au niveau desquelles sont prévues les articulations des éléments pivotants (portes ou volets) ne peuvent pas comprendre un revêtement pour le traitement acoustique. Dans le cas d'un inverseur à cascades, les surfaces non traitées peuvent représenter de l'ordre de 20% de la surface interne de la nacelle.

Ces configurations engendrent également des pertes aérodynamiques au niveau du flux s'écoulant dans le conduit secondaire en raison des nombreux raccords entre les parties fixes et les parties mobiles et des nombreux obstacles présents dans l'écoulement tels que les bielles pour les volets des inverseurs à cascades.

Ces configurations engendrent également des difficultés d'ajustement entre les parties fixes et les parties mobiles notamment celles utilisées pour dévier au moins une partie du flux du fait que la déformation desdites parties mobiles varie en fonction de leur position.

Enfin, la présence de nombreux éléments pivotants, notamment dans le cas d'un inverseur à cascades, conduit à augmenter la masse de la nacelle en raison de la multitude des systèmes d'articulations et d'asservissement et du renforcement de la structure de la nacelle afin d'assurer la reprise des efforts disséminés sur toute la périphérie de ladite nacelle et notamment sur la partie mobile de la nacelle (cadre arrière, renvois d'effort, etc.).

La demande de brevet WO 2007/003749 propose une solution consistant à prévoir des portes en partie arrière de la nacelle. Cette solution permet un meilleur traitement acoustique des surfaces intérieures mais conduit à augmenter l'épaisseur de la nacelle en partie arrière.

Aussi, la présente invention vise à pallier les inconvénients de l'art antérieur en proposant une nacelle d'aéronef incorporant un dispositif d'inversion de poussée de conception simple, susceptible d'optimiser le traitement acoustique, de ne pas nuire aux performances aérodynamiques et de limiter l'augmentation de la masse embarquée.

A cet effet, l'invention a pour objet une nacelle d'aéronef selon la revendication 1.

D'autres caractéristiques et avantages ressortiront de la description qui va suivre de l'invention, description donnée à titre d'exemple uniquement, en regard des dessins annexés sur lesquels :
- les figures 1A à 1C sont des vues latérales illustrant de manière schématique le dispositif d'inversion de poussée selon une variante de l'invention respectivement à l'état repos, en cours de déploiement et à l'état actif,
- la figure 2 est une coupe transversale illustrant de manière schématique une nacelle selon l'invention,
- les figures 3A et 4A sont des coupes selon la ligne AA de la figure 2 illustrant le dispositif d'inversion de poussée respectivement à l'état repos et à l'état actif,
- les figures 3B et 4B sont des coupes selon la ligne BB de la figure 2 illustrant le dispositif d'inversion de poussée respectivement à l'état repos et à l'état actif,
- les figures 5 à 7 sont des coupes transversales de la nacelle illustrant différentes variantes du dispositif d'inversion de poussée,
- les figures 8A à 8D sont des vues latérales illustrant de manière schématique une autre variante du dispositif d'inversion de poussée selon l'invention à différentes étapes de son déploiement, et
- les figures 9A à 9C sont des vues latérales illustrant de manière schématique une autre variante du dispositif d'inversion de poussée selon l'invention à différentes étapes de son déploiement.

Sur les différentes figures, on a représenté en 10 une nacelle d'aéronef dans laquelle est susceptible d'être disposée une motorisation représentée de manière schématique en 12.

La nacelle 10 comprend à l'avant une entrée d'air qui se divise en un conduit primaire traversant la motorisation et débouchant via une sortie primaire 14 à l'arrière de la nacelle et en un conduit secondaire 16 prévu à l'arrière d'une soufflante débouchant via une sortie secondaire 18. Ainsi, la poussée de l'ensemble propulsif formé par la nacelle et la motorisation découle notamment de l'éjection des écoulements fluidiques sortant des sorties primaire et secondaire 14 et 18.

La nacelle comprend une première paroi dont la surface extérieure 20 est en contact avec les écoulements fluidiques s'écoulant à l'extérieur de la nacelle et une seconde paroi dont la surface intérieure 22 délimite le conduit secondaire 16.

Deux bifurcations 24 sont généralement disposées dans le conduit secondaire 16 et forment dans ledit conduit 16 des cloisons disposées dans un plan vertical, dans des positions angulaires respectivement supérieure à 12h et inférieure à 6h. Ainsi, la nacelle comprend une structure renforcée dans la zone du plan médian vertical matérialisé par l'axe 26. Cette structure renforcée est également utilisée pour servir de point d'ancrage à un mât reliant la nacelle à l'aéronef, et plus particulièrement la nacelle à la voilure de l'aéronef.

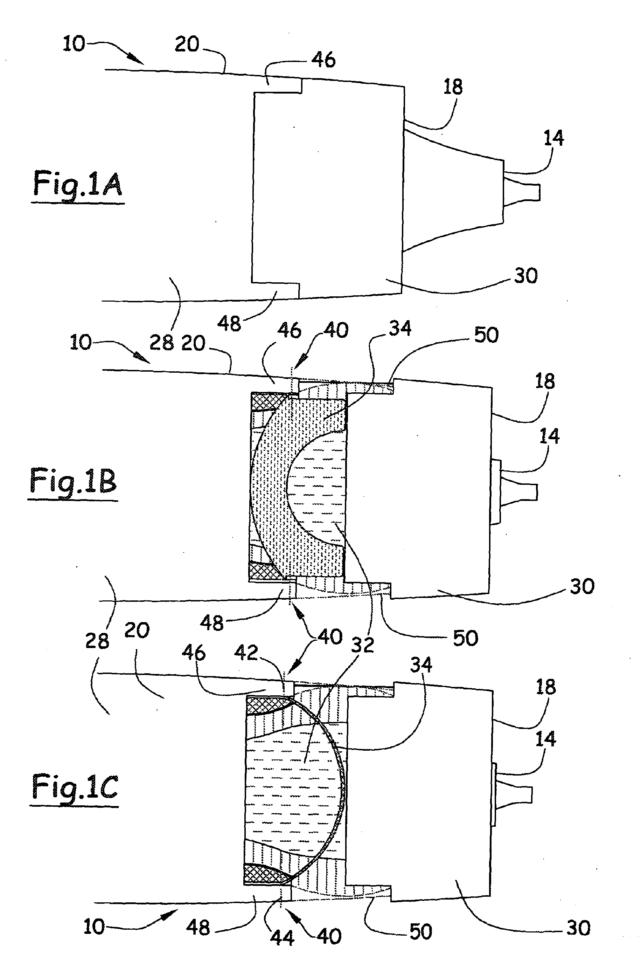

Tous ces éléments ne sont pas plus détaillés car ils sont connus de l'homme du métier et ils peuvent prendre différentes formes en fonction des configurations. La nacelle comprend au moins un dispositif permettant de diminuer, d'annuler ou d'inverser la poussée produite par l'ensemble propulsif. A cet effet, la nacelle 10 comprend au moins une partie fixe 28 et au moins une partie mobile 30 susceptible d'occuper une première position dans laquelle les parties fixe 28 et mobile 30 sont jointives comme illustré sur la figure 1A et une seconde position dans laquelle une ouverture radiale 32 est ménagée entre les parties fixe 28 et mobile 30, comme illustré sur les figures 1B et 1C.

Selon un mode de réalisation, la partie mobile 30 est disposée à l'arrière de la nacelle et peut se translater selon la direction longitudinale de la nacelle de manière à ménager une ouverture radiale 32 après translation. Des moyens de liaison et des actionneurs sont prévus pour assurer d'une part la liaison entre les parties fixe et mobile, et d'autre part, la translation de la partie mobile par rapport à la partie fixe. Avantageusement, ces moyens de liaison et ces actionneurs sont disposés approximativement à 12h et à 6h. Cette configuration permet de faciliter la reprise des efforts dans la mesure où les actionneurs et les moyens de liaison sont prévus au niveau des bifurcations 24 correspondant aux zones renforcées de la structure de la nacelle ce qui permet d'éviter de renforcer la nacelle en dehors de ces zones et de ne pas augmenter la masse embarquée.

Ces moyens de liaison et ces actionneurs ne sont pas plus détaillés car ils sont à la portée de l'homme du métier.

Sur les figures, on a représenté seulement une moitié de nacelle, cette dernière étant sensiblement symétrique selon le plan médian vertical contenant l'axe 26. Selon les variantes, la nacelle peut comprendre une seule partie fixe à l'avant et une seule partie mobile à l'arrière, l'ouverture étant ménagée sur toute la périphérie de la nacelle. Selon une autre variante, la nacelle comprend une seule partie fixe et deux parties mobiles, sensiblement symétriques selon le plan médian vertical, cinématiquement liées ou indépendantes, la translation de l'une étant indépendante de l'autre.

Selon d'autres variantes, on pourrait envisager plus de deux parties mobiles. Cependant, ces variantes conduiraient à complexifier et à alourdir la nacelle, la variante avec deux parties mobiles constituant un bon compromis.

Pour simplifier la description, celle-ci est faite au regard d'une moitié de nacelle comprenant une partie mobile.

Différentes formes peuvent être envisagées pour délimiter la partie fixe et la partie mobile. Ainsi, ladite partie fixe et ladite partie mobile ont des formes complémentaires afin d'assurer une continuité au niveau des surfaces extérieure 20 et intérieure 22 de la nacelle.

L'invention n'est pas limitée à la cinématique décrite par les figures, à savoir une translation pour obtenir une ouverture radiale 32 afin de faire communiquer le conduit secondaire avec l'extérieur de la nacelle. D'autres cinématiques pourrait être envisagées.

Le dispositif pour diminuer, annuler, inverser la poussée comprend au moins un volet 34 susceptible d'occuper au moins une position dite active dans laquelle, il dévie en direction de l'ouverture radiale 32 au moins une partie du flux susceptible de participer à la poussée et une autre position dite de repos dans laquelle il n'interfère pas avec le flux susceptible de participer à la poussée. En complément, des moyens d'orientation du flux dévié peuvent être prévus afin d'orienter le flux dévié vers l'avant de la nacelle, de manière plus ou moins radiale ou vers l'arrière de la nacelle. Cette orientation peut découler de la position du volet 34 ou de moyens annexes comme par exemple l'éjection d'un flux d'air sur la surface extérieure 20 de la nacelle en amont ou en aval de l'ouverture radiale 32 afin d'orienter le flux respectivement vers l'avant ou vers l'arrière de la nacelle ou l'intégration de cascades utilisées dans l'art antérieur. Ces moyens d'orientation ne sont pas plus détaillés car ils peuvent prendre différentes configurations selon les variantes.

En fonction de l'orientation du flux dévié et de la quantité de flux dévié, on obtient une diminution, une annulation ou une inversion de la poussée, la résultante poussée/flux dévié selon l'axe longitudinal de la nacelle étant respectivement soit orientée vers l'arrière, soit nulle ou soit orientée vers l'avant.

Par la suite, on entend par inversion de poussée, soit une diminution, soit une annulation, soit une inversion de la poussée.

Pour simplifier la description, l'invention est décrite au regard d'une partie mobile délimitant une ouverture radiale équipée d'un volet. Cependant la nacelle peut comprendre plusieurs volets un pour chaque ouverture radiale.

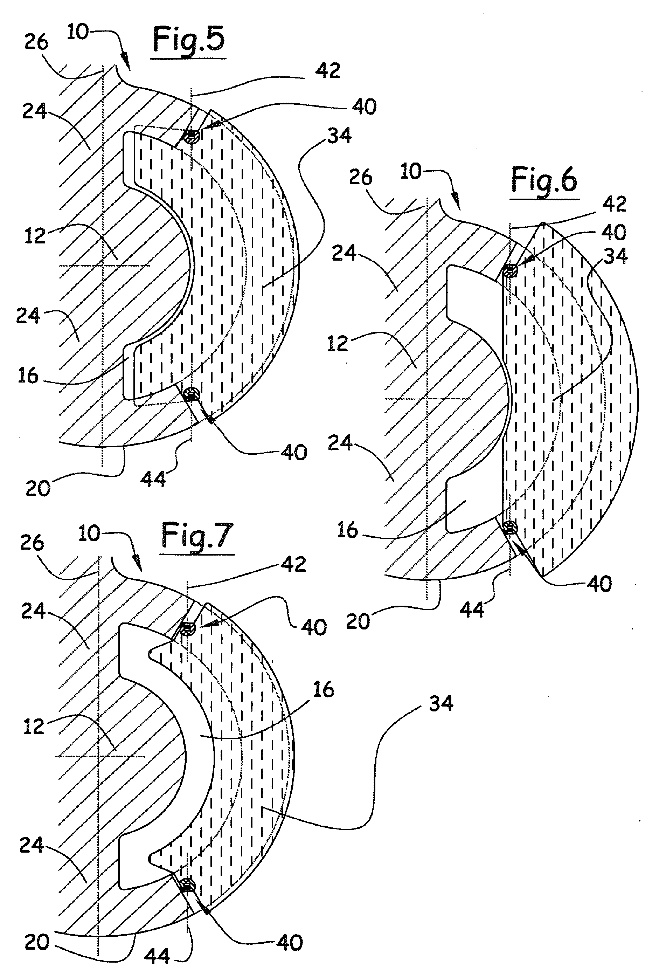

Selon les variantes, comme illustré sur les figures 5, 6, 7, le volet 34 peut avoir des formes plus ou moins complémentaires avec le conduit dans lequel s'écoule le flux à dévier en fonction notamment de la fraction de flux que l'on cherche à dévier. Comme illustré sur la figure 6, le volet pourrait être saillant vers l'extérieur de la nacelle pour augmenter sa capacité de guidage.

Selon l'invention, la paroi délimitant le conduit dans lequel s'écoule le flux à dévier comprend au moins une partie mobile susceptible d'occuper deux positions, une première position dans laquelle elle est interposée entre le flux à dévier et le volet 34 et une autre position dans laquelle elle dégage le volet de manière à permettre au volet de changer de position et de passer de la position repos à la position active.

Cette configuration permet de dissocier les fonctions à savoir celle consistant à dévier au moins une partie du flux assurée par le volet et celle visant à canaliser le flux lorsque le dispositif d'inversion de poussée n'est pas activé assurée par la partie mobile recouvrant le volet.

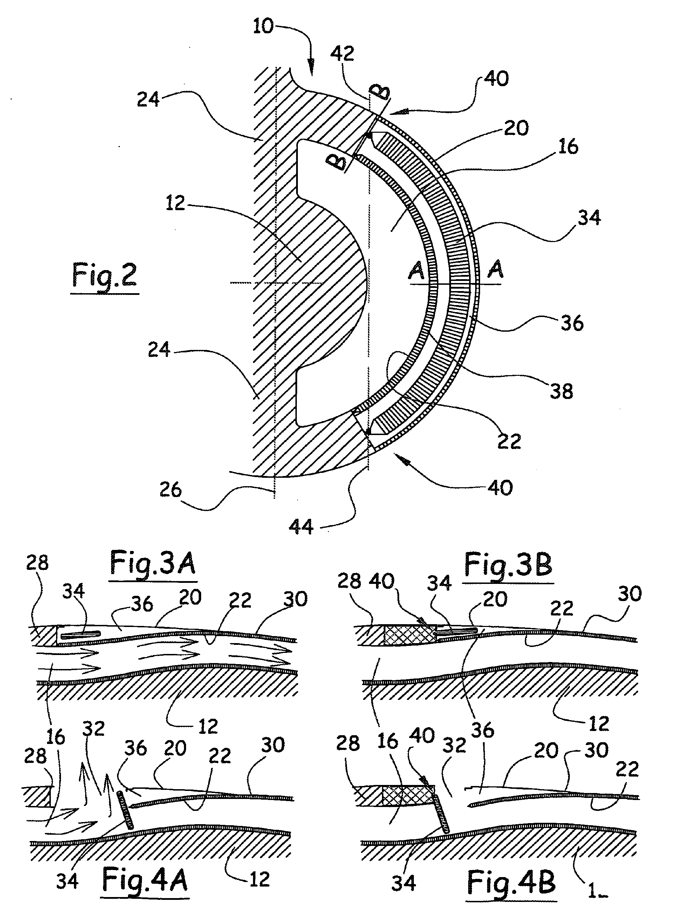

De préférence, la partie mobile permettant de dégager ou de recouvrir le volet correspond à la partie mobile 30 de la nacelle. Ainsi, un évidement 36 est prévu dans la partie mobile entre la paroi correspondant à la surface extérieure 20 et la paroi correspondant à la surface intérieure 22, ledit évidement 36 étant débouchant au niveau du champ de la partie mobile 30 susceptible d'être en contact avec la partie fixe et ayant des dimensions et des formes adaptées pour permettre de loger le volet 34. Ainsi, lorsque le volet 34 est dans la position repos comme illustré sur les figures 2, 3A et 3B, il est disposé dans l'évidement 36 et recouvert par la paroi correspondant à la surface intérieure 22 qui l'isole du flux à dévier. En position active, la partie mobile 30 après translation vers l'arrière dégage alors le volet qui peut alors pivoter comme illustré sur la figure 1C de manière à dévier au moins une partie du flux susceptible de participer à la poussée.

Cependant, l'invention n'est pas limitée à ce mode de réalisation. Ainsi, une partie mobile peut être prévue pour assurer la création d'une ouverture radiale et une autre partie mobile pour dissimuler le volet en position repos. Toutefois, cette solution conduirait à complexifier la nacelle et à augmenter la masse embarquée. Selon l'invention, la surface intérieure 22, notamment la partie recouvrant le volet, peut comprendre un revêtement 38 pour le traitement acoustique ce qui permet d'augmenter la superficie des surfaces traitées par rapport aux nacelles de l'art antérieur et contribue à réduire les nuisances sonores émises par l'aéronef. Par ailleurs, selon l'invention, il est possible d'obtenir un revêtement pour le traitement acoustique continu, non interrompu par des jointures ou autres, ce qui permet d'augmenter significativement l'efficacité dudit revêtement.

La partie mobile 30 de la nacelle n'étant pas soumise aux mêmes contraintes que le volet, mais à des contraintes sensiblement identiques à celles de la partie fixe 28, on obtient un ajustement satisfaisant entre la partie fixe et la partie mobile.

Par ailleurs, aucun des éléments du dispositif d'inversion de poussée lorsque celui ci est à l'état repos, n'interfère avec le flux susceptible de participer à la poussée. Selon l'invention, on obtient une continuité satisfaisante des surfaces délimitant le conduit secondaire, notamment entre la partie fixe et la partie mobile et on limite le nombre de jointures entre la partie fixe et la partie mobile. Ces caractéristiques contribuent à optimiser les performances aérodynamiques de la nacelle.

Enfin, selon un autre avantage, les formes et dimensions du conduit peuvent être caractérisées seulement en tenant compte des caractéristiques aérodynamiques recherchées sans tenir compte de la fonction d'inversion de poussée ce qui permet de simplifier la conception de la nacelle, un compromis n'étant pas nécessaire entre les caractéristiques aérodynamiques et la fonction d'inversion de poussée.

Le volet 34 comprend des moyens 40 d'articulation assurant la liaison dudit volet avec la nacelle et plus particulièrement la partie fixe 28.

Selon une caractéristique de l'invention, ces moyens 40 d'articulation sont disposés de manière à relier le volet 34 à proximité des bifurcations 24 correspondant aux zones renforcées de la structure de la nacelle ce qui permet d'éviter de renforcer la nacelle en dehors de ces zones et de ne pas augmenter la masse embarquée.

Selon un mode de réalisation, les moyens 40 d'articulation comprennent un premier axe de pivotement 42 disposé au niveau d'une première extrémité dite extrémité supérieure du volet 34 et en partie supérieure de la nacelle et un second axe de pivotement 44 disposé au niveau d'une seconde extrémité dite extrémité inférieure du volet 34 et en partie inférieure de la nacelle. Dans ce cas, le volet 34 est galbé, comme illustré sur les figures 1C, 2, 8D et 9C, afin de pouvoir se loger dans l'évidement 36 ménagé dans la partie mobile 30.

De préférence, les axes de pivotement 42 et 44 sont sensiblement parallèles à l'axe médian vertical 26 et sont avantageusement alignés de manière à ne former qu'un seul axe de pivotement.

L'axe de pivotement ou les axes de pivotement 42 et 44 sont de préférence positionnés au plus proche du centre de poussée aérodynamique du volet afin de limiter les efforts de torsion dans l'ensemble de la structure.

Selon un mode de réalisation, la partie fixe 28 comprend un prolongement 46 vers l'arrière en partie supérieure et un prolongement 48 vers l'arrière en partie inférieure, sensiblement symétriques par rapport à l'axe médian vertical 26, ces prolongements 46 et 48 supportant les axes de pivotement 42 et 44. En complément, la ou les parties mobiles comprennent des échancrures en partie supérieure et inférieure dont les formes coopèrent avec celles des prolongements de la partie fixe.

Selon les cas, le système d'asservissement permettant d'assurer le mouvement de pivotement du ou des volets 34 peut être indépendant du système d'asservissement permettant le déplacement de la ou des parties mobiles 30. Selon un autre mode de réalisation, le pivotement du ou des volets 34 et le déplacement de la ou des parties mobiles peuvent être assurés par un seul système d'asservissement. Ainsi, à titre d'exemple, un ensemble de vérins hydrauliques ou vérins à vis pourront être intégrés à l'intérieur ou à proximité des bifurcations 24 supérieure et inférieure de la nacelle, et contrôler par le biais de renvois d'efforts la position de la ou des parties mobiles 30 et la position du ou des volets 34. Cette solution permet de limiter la masse embarquée.

Selon une autre variante, on peut prévoir un premier système d'asservissement visant à contrôler la translation d'une partie mobile et le pivotement du volet correspondant disposé au niveau d'un premier côté de la nacelle et un second système d'asservissement visant à contrôler la translation d'une partie mobile et le pivotement du volet correspondant disposés au niveau d'un second côté de la nacelle. Ainsi, l'asservissement des deux groupes mobiles est ségrégué afin de limiter les risques de déploiement intempestif en vol.

Sur le plan aérodynamique, les dimensions du volet et les formes des découpes séparant la partie fixe de la partie mobile sont déterminées afin que la section de sortie du flux secondaire (s'écoulant dans le conduit secondaire) soit sensiblement constante afin de ne pas varier au-delà d'un certain seuil de l'ordre de +/- 20% pour ne pas engendrer de phénomène de pompage au niveau de la soufflante.

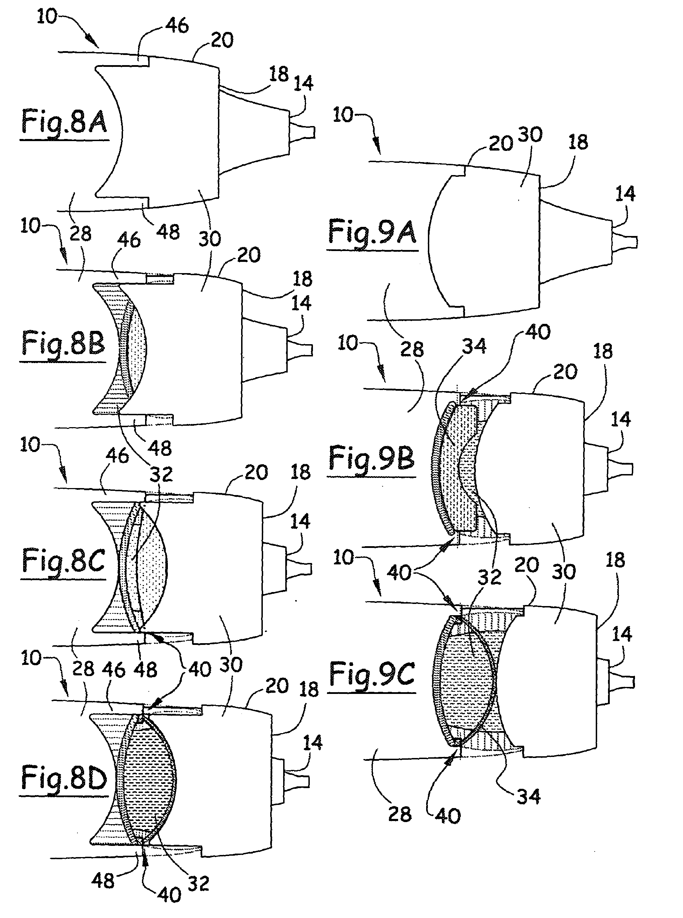

Ainsi, comme illustré sur les figures 8A à 8D, le bord de la partie mobile 30 susceptible d'être en contact avec la partie fixe peut comprendre une forme concave qui coopère avec celle du volet 34 lorsque ce dernier est en position active.

Selon cette configuration, le volet peut commencer à pivoter avant que la partie mobile 30 soit en bout de course et la section de sortie du flux secondaire varie dans une plage ne dépassant pas un certain seuil de l'ordre de +/- 20% durant le déploiement du volet.

Selon une autre variante illustrée sur les figures 9A à 9C, le bord de la partie mobile 30 susceptible d'être en contact avec la partie fixe peut comprendre une forme convexe.

Selon une autre caractéristique, le dispositif d'inversion de poussée de l'invention peut être combiné à un autre dispositif de poussée tel que par exemple un inducteur aérodynamique positionné en amont de l'ouverture radiale de la nacelle. Selon une autre caractéristique de l'invention, des déflecteurs 50 peuvent être ajoutés afin d'assurer une certaine continuité aérodynamique entre les différentes parties de la nacelle et notamment entre la partie fixe et les parties mobiles lorsque ces dernières sont translatées vers l'arrière.

Selon une autre caractéristique de l'invention, on peut obtenir une variation de la section de sortie du flux secondaire en translatant les parties mobiles 30 prévues à l'arrière de la nacelle du fait de la différence de conicité entre la partie extérieure et la partie intérieure de la nacelle.

Ainsi, les parties mobiles 30 peuvent assurer plusieurs fonctions, à savoir créer une ouverture radiale, loger le volet d'inversion de poussée et faire varier la section de sortie du flux secondaire. Ceci contribue à réduire la masse embarquée du fait qu'il n'est pas nécessaire de prévoir un dispositif spécifique à chaque fonction.

Le fonctionnement du dispositif d'inversion de poussée est maintenant décrit en regard des différentes figures.

Lorsque le dispositif d'inversion de poussée est à l'état repos, la partie fixe 28 et la ou les parties mobiles 30 sont jointives, comme illustré sur les figures 1A, 3A, 3B, 8A et 9B. Les lignes aérodynamiques internes et externes de la nacelle sont ainsi continues ce qui contribue à obtenir des caractéristiques aérodynamiques optimisées. Par ailleurs, aucun élément ne vient en saillie dans le conduit secondaire contrairement à l'art antérieur.

Lors du déclenchement du dispositif d'inversion de poussée, la ou les parties mobiles 30 se translatent vers l'arrière afin de ménager une ouverture radiale 32, une pour chaque partie mobile, comme illustré sur les figures 1B, 8B et 9B.

Selon les variantes, le ou les volets 34 peuvent commencer à pivoter avant que les parties mobiles correspondantes ne soient arrivées en bout de course, comme illustré sur la figure 8C.

A l'issue du déploiement du ou des volets, ces derniers sont disposés de manière à venir en saillie dans le conduit secondaire afin de dévier au moins une partie du flux secondaire, comme illustré sur les figures 1C, 4A, 4B, 8D, 9C.

Pour revenir à l'état repos, les étapes précédentes sont reprises dans l'ordre inverse.

## Revendications

1. Nacelle d'aéronef dans laquelle est disposée une motorisation, et délimitant un conduit (16) dans lequel est susceptible de s'écouler un flux susceptible de participer à la poussée, ladite nacelle comprenant un dispositif pour diminuer, annuler, inverser la poussée comportant au moins un volet (34) susceptible d'occuper au moins une position dite active dans laquelle il dévie en direction d'une ouverture radiale (32) au moins une partie du flux susceptible de participer à la poussée et une autre position dite de repos dans laquelle ledit volet (34) n'interfère pas avec le flux susceptible de participer à la poussée, ladite nacelle comprenant au moins une partie fixe (28) et au moins une partie mobile (30) susceptible d'occuper une première position dans laquelle les parties fixe (28) et mobile (30) sont jointives et une seconde position dans laquelle une ouverture radiale (32) est ménagée entre les parties fixe (28) et mobile (30), ladite au moins une partie mobile (30) comprenant un évidement (36) entre la paroi correspondant à la surface extérieure (20) de la nacelle et la paroi correspondant à la surface intérieure (22) de la nacelle, ledit évidement (36) étant débouchant au niveau du champ de la partie mobile (30) susceptible d'être en contact avec la partie fixe et ayant des dimensions et des formes adaptées pour permettre de loger le volet (34), de sorte que, dans la première position la partie mobile (30) est interposée entre le flux à dévier et le volet (34) et dans la seconde position la partie mobile (30) dégage le volet (34) de manière à permettre audit volet de changer de position et de passer de la position repos à la position active, **caractérisée en ce que** chaque volet (34) comprenant des moyens (40) d'articulation avec un premier axe de pivotement (42) disposé au niveau d'une première extrémité dite extrémité supérieure du volet (34) et en partie supérieure de la nacelle et un second axe de pivotement (44) disposé au niveau d'une seconde extrémité dite extrémité inférieure du volet (34) et en partie inférieure de la nacelle, lesdits axes de pivotement (42, 44) étant sensiblement parallèles à l'axe médian vertical (26) de la nacelle, la partie fixe (28) comprend un prolongement (46) vers l'arrière en partie supérieure et un prolongement (48) vers l'arrière en partie inférieure, ces prolongements (46, 48) supportant les axes de pivotement (42, 44).

2. Nacelle d'aéronef selon la revendication 1, **caractérisée en ce que** le bord de ladite au moins une partie mobile (30) susceptible d'être en contact avec ladite au moins une partie fixe (28) comprend une forme concave qui coopère avec celle du volet (34).

3. Nacelle d'aéronef selon la revendication 1 ou 2, **caractérisée en ce que** le bord de ladite au moins une partie mobile (30) susceptible d'être en contact avec ladite au moins une partie fixe (28) comprend une forme convexe.

4. Nacelle d'aéronef selon l'une quelconque des revendications 1 à 3, **caractérisée en ce que** les moyens (40) d'articulation comprennent au moins un axe de pivotement positionné au plus proche du centre de poussée aérodynamique du volet.

5. Nacelle d'aéronef selon l'une quelconque des revendications précédentes, **caractérisée en ce que** le volet (34) a des formes complémentaires avec le conduit dans lequel s'écoule le f lux à dévier en fonction notamment de la fraction de flux que l'on cherche à dévier.

## Claims

1. Aircraft nacelle in which a power plant is arranged and that delimits a duct (16) in which a flow that is able to assist the thrust is able to flow, whereby said nacelle comprises a device for reducing, canceling, or reversing the thrust that comprises at least one flap (34) that can occupy at least one so-called active position in which it deflects in the direction of a radial opening (32) at least a portion of the flow that is able to assist the thrust and another so-called at-rest position in which said flap (34) does not interfere with the flow that can assist the trust, whereby said nacelle comprises at least one stationary part (28) and at least one moving part (30) that can occupy a first position in which the stationary parts (28) and the moving parts (30) are contiguous, and a second position in which a radial opening (32) is made between the stationary part (28) and the moving part (30), said at least one moving part (30) comprises a recess (36) between the wall that corresponds to the outside surface (20) of the nacelle and the wall that corresponds to the inside surface (22) of the nacelle, said recess (36) empties out at the field of the moving part (30) that can be in contact with the stationary part and has dimensions and shapes that are suitable for making it possible to house the flap (34), so that, in the first position the moving part (30) is interposed between the flow to be deflected and the flap (34) and in the second position the moving part (30) releases the flap (34) so as to allow said flap to change position and to move from the at-rest position to the active position, **characterized in that** each flap (34) comprises articulations means (40) with a first pivoting axis (42) arranged at a first end called the upper end of the flap (34) and in the upper part of the nacelle and a second pivoting axis (44) arranged at a second end called the lower end of the flap (34) and in the lower part of nacelle, said pivoting axes (42, 44) are essentially parallel to the vertical median axis (26) of the nacelle, the stationary part (28) comprising an extension (46) toward the rear in the upper part and an extension (48) toward the rear in the lower part, these extensions (46,48) supporting the pivoting axes (42,44).

2. Aircraft nacelle according to claim 1, wherein the edge of said least one moving part (30) that can be in contact with said at least one stationary part (28) comprises a concave shape that works with that of the flap (34).

3. Aircraft nacelle according to claim 1 or 2, wherein the edge of said at least one moving part (30) that is able to be in contact with said at least one stationary part (28) comprises a convex shape.

4. Aircraft nacelle according to any of claims 1 to 3, wherein the articulation means (40) comprise at least one pivoting axis that is positioned very close to the center of the aerodynamic thrust of the flap.

5. Aircraft nacelle according to any of the preceding claims, wherein the flap (34) has shapes that are complementary to the duct in which the flow to be deflected flows based in particular on the fraction of the flow that is to be deflected.

## Patentansprüche

1. Flugzeuggondel, in der eine Motorisierung angeordnet ist und die eine Führung (16) begrenzt, in der ein Strom, der geeignet ist, am Schub beteiligt zu sein, zu strömen in der Lage ist, wobei die Gondel eine Vorrichtung zum Verringern, Aufheben, Umkehren des Schubs umfasst, die wenigstens eine Klappe (34) aufweist, die geeignet ist, wenigstens eine sogenannte aktive Stellung, in der sie wenigstens einen Teil des Stroms, welcher geeignet ist, am Schub beteiligt zu sein, in Richtung einer radialen Öffnung (32) ablenkt, sowie eine weitere sogenannte Ruhestellung einzunehmen, in der die Klappe (34) nicht mit dem Strom, welcher geeignet ist, am Schub beteiligt zu sein, interferiert, wobei die Gondel wenigstens einen feststehenden Teil (28) sowie wenigstens einen beweglichen Teil (30) umfasst, der geeignet ist, eine erste Position, in der der feststehende Teil (28) und der bewegliche Teil (30) aneinanderstoßend sind, sowie eine zweite Position einzunehmen, in der eine radiale Öffnung (32) zwischen dem feststehenden Teil (28) und dem beweglichen Teil (30) ausbebildet ist, wobei der wenigstens eine bewegliche Teil (30) eine Ausnehmung (36) zwischen der der Außenseite (20) der Gondel entsprechenden Wand und der der Innenseite (22) der Gondel entsprechenden Wand aufweist, wobei die Ausnehmung (36) in dem Bereich des beweglichen Teils (30), der geeignet ist, mit dem feststehenden Teil in Kontakt zu sein, mündet sowie angepasste Abmessungen und Formen aufweist, um die Aufnahme der Klappe (34) zu ermöglichten, so dass in der ersten Position der bewegliche Teil (30) zwischen dem abzuleitenden Strom und der Klappe (34) angeordnet ist und in der zweiten Position der bewegliche Teil (30) die Klappe (34) freigibt, um der Klappe zu ermöglichen, die Position zu ändern und von der Ruhestellung in die aktive Stellung überzugehen, **dadurch gekennzeichnet, dass** jede Klappe (34) Anlenkmittel (40) aufweist, mit einer ersten Schwenkachse (42), die im Bereich eines ersten Endes, sogenannten oberen Endes der Klappe (34) und am oberen Teil der Gondel angeordnet ist, und mit einer zweiten Schwenkachse (44), die im Bereich eines zweiten Endes, sogenannten unteren Endes der Klappe (34) und am unteren Teil der Gondel angeordnet ist, wobei die Schwenkachsen (42, 44) im Wesentlichen parallel zur vertikalen Mittelachse (26) der Gondel verlaufen, wobei der feststehende Teil (28) eine Verlängerung (46) nach hinten am oberen Teil und eine Verlängerung (48) nach hinten am unteren Teil aufweist, wobei diese Verlängerungen (46, 48) die Schwenkachsen (42, 44) tragen.

2. Flugzeuggondel nach Anspruch 1, **dadurch gekennzeichnet, dass** der Rand des wenigstens einen beweglichen Teils (30), der geeignet ist, mit dem wenigstens einen feststehenden Teil (28) in Kontakt zu sein, eine konkave Form aufweist, die mit der der Klappe (34) zusammenwirkt.

3. Flugzeuggondel nach Anspruch 1 oder 2, **dadurch gekennzeichnet, dass** der Rand des wenigstens einen beweglichen Teils (30), der geeignet ist, mit dem wenigstens einen feststehenden Teil (28) in Kontakt zu sein, eine konvexe Form aufweist.

4. Flugzeuggondel nach einem der Ansprüche 1 bis 3, **dadurch gekennzeichnet, dass** die Anlenkmittel (40) wenigstens eine Schwenkachse umfassen, die möglichst nahe dem aerodynamischen Schubzentrum der Klappe positioniert ist.

5. Flugzeuggondel nach einem der vorhergehenden Ansprüche, **dadurch gekennzeichnet, dass** die Klappe (34) komplementäre Formen zu der Führung, in der der abzuleitende Strom strömt, insbesondere in Abhängigkeit des Teils des Stroms, der abgeleitet werden soll, aufweist.
